# EUROPÄISCHE PATENTSCHRIFT

(11) **EP 1 917 176 B1**
(45) Veröffentlichungstag und Bekanntmachung des Hinweises auf die Patenterteilung: **25.09.2013**
(21) Anmeldenummer: 06754652.3
(22) Anmeldetag: 01.07.2006
(51) Int. Cl.: B62D 1/19

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION REGLABLE POUR UN VEHICULE AUTOMOBILE

(30) Priorität: 22.07.2005 DE 102005035009
(43) Veröffentlichungstag der Anmeldung: 07.05.2008
(73) Patentinhaber: ThyssenKrupp Presta Aktiengesellschaft, 9492 Eschen (LI)
(72) Erfinder: SENN, Mathias, CH-9475 Sevelen (CH)
(74) Vertreter: Hofmann, Ralf U.
(86) Internationale Anmeldenummer: PCT/EP2006/006426
(87) Internationale Veröffentlichungsnummer: WO 2007/009576

(56) Entgegenhaltungen:
- EP-A- 1 170 194
- FR-A- 2 270 488

## Beschreibung

EP 1 170 194 A1 offenbart eine gattungsgemäße verstellbare Lenksäule für ein Kraftfahrzeug mit einem in mindestens eine Stellrichtung verstellbaren Stellteil zur Einstellung der Position der Lenksäule, einem in diese Stellrichtung unverstellbaren Halteteil, einer Fixiereinrichtung, in deren geöffnetem Zustand das Stellteil gegenüber dem Halteteil zur Einstellung der Position der Lenksäule verstellbar ist und in deren geschlossenem Zustand das Stellteil von der Fixiereinrichtung gegenüber dem Halteteil festgestellt ist, wobei die verstellbare Lenksäule eine Crash-Blockiereinrichtung umfasst, von der eine zusätzliche Haltekraft gegen eine Verschiebung des Stellteils gegenüber dem Halteteil ausübbar ist und die ein mit dem Stellteil verbundenes Blockierelement und ein mit dem Halteteil verbundenes Blockierelement aufweist.

Verstellbare Lenksäulen dienen zur Erhöhung des Komforts des Fahrers und können in ihrer Längen-, Höhen- und/oder Winkelposition verändert werden, um so die Position des Steuerrades auf die Sitzposition des Fahrers anpassen zu können. Hierzu verfügen diese Lenksäulen über ein Stellteil, dessen Lage in Bezug auf ein Halteteil veränderbar ist und mit einer Fixiereinrichtung oder einem Klemmsystem festlegbar ist.

Für verstellbare Lenksäulen stellt sich das Problem, dass im Crashfall ein unkontrolliertes Verstellen der Lenksäule verhindert werden muss, damit beispielsweise genügend Rückhaltekraft zum Öffnen des Airbags zur Verfügung steht und/oder die Energie beim Aufprall des Fahrers auf das Steuerrad kontrolliert abgebaut werden kann. Gleichzeitig soll die Fixiereinrichtung leichtgängig und mit geringen Wegen der Betätigungsglieder geöffnet und geschlossen werden können und nur wenig Bauraum einnehmen.

Zur Fixierung der eingestellten Position werden in der EP 0 802 104 B1 beispielsweise sich sandwichartig kreuzende Pakete von Lamellen vorgeschlagen, wobei das eine Lamellenpaket an dem die Lenkspindel aufnehmendem Stellteil, hier eine Manteleinheit, die die Lenkspindel drehbar lagert, und das andere Lamellenpaket an einem mit dem Fahrzeugchassis verbundenen Halteteil verbunden ist. Die beiden sich kreuzenden Lamellenpakete werden von einem Spannbolzen durchsetzt und durch Betätigen eines Spannhebels gegenseitig verklemmt. Damit die Lenksäule verstellt werden kann, besitzen die Lamellen in den Verstellrichtungen der Lenksäule ausgerichtete Langlöcher, wobei die Langlöcher in allen Lamellen eines Lamellenpaketes gleich ausgerichtet sind.

Diese Systeme gestatten eine Fixierung der Lenksäule bereits mit wenigen Lamellen und einem kurzen Betätigungsweg und einer relativ geringen Spannkraft. Um allerdings die hohen Haltekräfte, wie sie für den Crashfall erforderlich sind, aufnehmen zu können, muss die Anzahl der Lamellen und/oder die Klemmkraft erhöht werden. Dadurch wird die Fixiereinrichtung aufwändiger, teurer und nimmt mehr Bauraum in Anspruch. Weiters werden die Wege und Kräfte zur Betätigung des Spannhebels größer. Außerdem kann der Energieabbau bei einem Durchrutschen der Fixiereinrichtung im Crashfall nur ungenau eingestellt werden.

Eine derartige verstellbare Lenksäule mit einer relativ großen Anzahl von Lamellen ist aus der EP 1 170 194 A1 bekannt. Im geöffneten Zustand einer Fixiereinrichtung sind die Lamellen gegeneinander verschiebbar und ein Stellteil der Lenksäule kann zur Einstellung der Position der Lenksäule in mindestens eine Stellrichtung gegenüber einem in diese Stellrichtung unverstellbaren Halteteil verstellt werden. Im geschlossenen Zustand der Fixiereinrichtung werden die Lamellen gegeneinander verspannt und das Stellteil ist somit von der Fixiereinrichtung gegenüber dem Halteteil festgestellt. Hierbei soll zumindest für die Höhenverstellung eine ausreichend große Haltekraft auch für den Crashfall bereitgestellt werden. Die zu diesem Zweck vorgesehenen zusätzlichen Reibflächen, über die eine über den Normalbetrieb hinausgehende Haltekraft bereitgestellt wird, können insofern als "Crash-Blockiereinrichtung" angesehen werden. Diese Crash-Blockiereinrichtung umfasst ein mit dem Stellteil in Verbindung stehendes Blockierelement und ein mit dem Halteteil in Verbindung stehendes Blockierelement.

In der EP 0 836 981 wird beispielsweise zur Fixierung der eingestellten Position vorgeschlagen, eine Zahnleiste, die an einer mit dem Fahrzeugchassis verbundenen Trageinheit befestigt ist, mit einer zweiten Zahnleiste, die an der die Lenkspindel aufnehmenden Manteleinheit befestigt ist, in Eingriff zu bringen. Zur Verstellung der Lenksäule werden diese Zahnleisten außer Eingriff gebracht, so dass ein Verschieben der Lenksäule ermöglicht wird.

Damit derartige Systeme im Crashfall nicht durchrutschen, müssen die Verzahnungen entsprechend kräftig ausgelegt sein und eine ausreichende Spannkraft vorgesehen sein, damit die Verzahnungen nicht außer Eingriff kommen. Damit werden die Wege und Kräfte zur Betätigung des Spannhebels größer. Darüberhinaus bedingt eine kräftige Auslegung der Verzahnung, dass die Zahnabstände vergrößert werden müssen, wodurch die Schrittweite, in denen die Lenksäule verstellt werden kann, vergrößert wird. Für den Komfort ist es aber gewünscht, eine möglichst kontinuierliche oder zumindest feinstufige Verstellung zu ermöglichen.

Zudem benötigen beide genannten Prinzipien eine sehr hohe Steifigkeit der karosserieseitigen Trageinheit.

In der DE 196 17 561 C1 wird deshalb eine Crash-Blockiereinrichtung mit einem zusätzlichen Arretierteil vorgeschlagen, das unabhängig von der Fixiereinrichtung wirkt und im Crashfall eine zusätzliche Haltekraft aufbringt.

Der Nachteil dieser Lösung besteht jedoch darin, dass ein derartiges zusätzliches Arretierteil vorgesehen werden muss, was zusätzlichen Bauraum und Kosten benötigt. Ferner muss sichergestellt sein, dass ein derartiges zusätzliches Arretierteil im Crashfall, aber nur dann, sicher in Eingriff gelangt und für den Fall, das die Lenksäule verstellt werden soll sicher außer Eingriff gebracht ist.

Die DE 102 61 538 A1 zeigt eine verstellbare Kraftfahrzeuglenksäule, bei der Mittel zur Erhöhung der Haltekraft für den Fall eines Fahrzeug-Crashs in die Positionsfeststelleinheit integriert sind. Hierzu besitzt die Spannvorrichtung ein Verkantteil, wobei bei einer mit einer Verformung der Lenksäule einhergehenden Verdrehung eine Mitnahme des Verkantteils erfolgt und Klemmkanten und Klemmflächen miteinander in Eingriff gelangen, so dass die Verschiebbarkeit des Verkantteils gehemmt wird.

Die Aufgabe der Erfindung besteht darin, eine Fixiereinrichtung für eine verstellbare Lenksäule für ein Kraftfahrzeug bereitzustellen, die im Crashfall eine ausreichend große Haltekraft bereitstellt, damit beispielsweise die Funktion des Airbags gewährleistet ist oder beispielsweise die Energie beim Aufprall des Fahrers auf das Steuerrad kontrolliert absorbiert werden kann. Hierbei soll die Fixiereinrichtung mit möglichst geringen Betätigungskräften und/oder Betätigungswegen zwischen dem geöffnetem und fixiertem Zustand wechselseitig betätigt werden können. Weiter soll das gesamte System, das für den normalen Fahrbetrieb und für den Crashfall zur Fixierung dient, vorzugsweise möglichst einfach, platzsparend, kostengünstig und aus möglichst wenig zusätzlichen Komponenten herstellbar sein.

Erfindungsgemäß gelingt dies bei einer verstellbaren Lenksäule der eingangs genannten Art dadurch, dass eines der Blockierelemente der Crash-Blockiereinrichtung zumindest eine Schuppe aufweist, die im unbelasteten Zustand federnd aus der Oberfläche des Blockierelements herausragt, und das andere dieser Blockierelemente zumindest eine Aussparung aufweist und im geschlossenen Zustand der Fixiereinrichtung mindestens eine Schuppe im Bereich einer Aussparung liegt oder bei einem einsetzenden Durchrutschen des Stellteils gegenüber dem Halteteil in den Bereich einer Aussparung gelangt und die mindestens eine im Bereich der Aussparung liegende oder in diesen gelangende Schuppe in die Aussparung hineinragt und einem Rand der Aussparung gegenüber liegt.

Wird die Fixiereinrichtung geöffnet, so sind die Schuppen und die Aussparungen außer Eingriff gebracht, so dass das Stellteil der Lenksäule gegenüber dem Halteteil der Lenksäule verstellt werden kann.

Wird die Fixiereinrichtung geschlossen, so ist das Verstellen des Stellteils gegenüber dem Halteteil gesperrt. Wenn es im Crashfall zu derart hohen Kräften kommt, beispielsweise durch die Rückstosskraft des Airbags oder den Aufprall des Fahrers auf das Steuerrad, dass die Fixiereinrichtung ohne die Crash-Blockiereinrichtung die Verstellung des Stellteils gegenüber dem Halteteil nicht sperren könnte, so wird von der Crash-Blockiereinrichtung eine zusätzliche Haltekraft gegen eine Verschiebung des Stellteils gegenüber dem Halteteil aufgebracht.

Diese Crash-Blockiereinrichtung umfasst die mindestens eine Schuppe, vorzugsweise mehrere Schuppen, an dem einen Blockierelement. Diese Schuppen werden beim Schließen der Fixiereinrichtung gegen die Oberfläche des anderen Blockierelementes gedrückt und einzelne Schuppen können dabei in die mindestens eine Aussparung, vorzugsweise mehrere Aussparungen, dieses anderen Blockierelementes in Eingriff gebracht werden. Im Crashfall werden nun die Schuppen, die im Eingriff gebracht sind, an den Begrenzungen der Aussparungen zur Anlage kommen und damit eine zusätzliche Haltekraft gegen eine Verstellung des Stellteils gegenüber dem Halteteil aufbringen. Es kann hierbei sein, dass eine Schuppe bereits an einem Rand einer Aussparung anliegt, sodass diese im Crashfall sofort wirksam wird und eine die Verschiebung des Stellteils gegenüber dem Halteteil sperrende Haltekraft aufbringt. Es kann aber auch sein, dass zunächst noch ein Abstand zwischen dem freien Ende der Schuppe und dem Rand der Aussparung vorliegt und die Schuppe erst nach einer beginnenden Verschiebung des Stellteils gegenüber dem Halteteil (im geschlossenen Zustand der Fixiereinrichtung) zur Anlage kommt, worauf sie wirksam wird.

Es ist weiters auch möglich und durchaus im Sinne der erfindungsgemäßen Lösung, dass zunächst im geschlossenen Zustand der Fixiereinrichtung keine einzige Schuppe mit einer Aussparung in Eingriff gebracht ist. In diesem Fall kommt es im Crashfall zu einem anfänglichen Durchrutschen des Stellteils gegenüber dem Halteteil und damit einer Verschiebung der beiden Blockierelemente zueinander. Durch diese Verschiebung wird zumindest eine Schuppe über eine Aussparung positioniert, wobei diese Schuppe, aufgrund ihrer federnden Wirkung sofort in die Öffnung der Aussparung eindringt und bei fortschreitender Verschiebung an den Rand der Aussparung zur Anlage kommt, so dass auch in diesem Fall eine zusätzliche Haltekraft gegen eine Verstellung des Stellteils gegenüber dem Halteteil aufgebracht wird. Entsprechend stellt sich ein relativ kurzer maximaler Verschiebeweg ein, der durch die Anordnung und Auslegung der Schuppen und der Aussparungen vorbestimmt ist.

Die Schuppen brauchen im federentspannten Zustand nur sehr wenig über die Oberfläche des Blockierelementes hinauszuragen. Dringt eine Schuppe, auch nur knapp, in eine Aussparung ein, so wird sie sich bei fortschreitender Verschiebung weiter aufbiegen und fest in der Aussparung verklemmen, so dass eine sehr widerstandsfähige Blockierung gegenüber einer weiteren Verschiebung des Stellteils gegenüber dem Halteteil erreicht ist.

Auf Grund dieser Wirkungsweise muss nur sehr wenig Weg für das Öffnen und Schliessen der Fixiereinrichtung vorgesehen sein, wobei die Fixiereinrichtung dennoch auch im Crashfall eine sehr hohe Blockierkraft aufbringt. Die Spannkräfte zum Eindrücken der Schuppen in die Oberfläche des Blockierelementes sind dabei gering.

Durch die bevorzugte Integration der Crash-Blockiereinrichtung in die Fixiereinrichtung wird die Anzahl der Teile nicht oder nur sehr wenig erhöht.

Durch die erfindungsgemässe Anordnung kann die Fixiereinrichtung in jeder Position geschlossen werden.

Die Aussparungen sind bevorzugt als Sacklöcher ausgelegt, um damit die Blockierwirkung zu erhöhen. Besonders einfach ist es dabei, dieses Blockierelement aus einem durchgelochten Teil und einem dahinterliegenden Teil, das die Aussparungen abdeckt, zu bilden.

Vorteilhafterweise kann die Erfindung bei unterschiedlichen Wirkungsprinzipien der Fixiereinrichtung eingesetzt werden. So kann die Fixiereinrichtung reibschlüssig mittels im geschlossenen Zustand aneinander angedrückten Reibflächen wirken und/oder formschlüssig, beispielsweise mittels im geschlossenen Zustand ineinander eingreifenden Verzahnungen.

Eine erfindungsgemäße Lenksäule, die in mehreren Verstellrichtungen verstellbar ist, kann nur für eine Verstellrichtung eine erfindungsgemäße Crash-Blockiereinrichtung oder für unterschiedliche Verstellrichtungen jeweils eine erfindungsgemäße Crash-Blockiereinrichtung aufweisen.

In einer möglichen Ausführungsform der Erfindung ist eines der beiden Blockierelemente vom Halteteil in die Verstellrichtung, in die das Blockierelement wirkt, unverschiebbar gehalten, In einer anderen möglichen Ausführungsform ist eines der beiden Blockierelemente einteilig mit dem Halteteil ausgebildet.

Anhand der schematischen Figuren wird die Erfindung in einem Ausführungsbeispiel näher erläutert. Die Figuren zeigen dabei folgendes:
Figur 1: Prinzipskizze mit Schnitt durch die Crash-Blockiereinrichtung im geöffneten Zustand der Fixiereinrichtung;
Figur 2: Prinzipskizze mit Schnitt durch die Crash-Blockiereinrichtung im geschlossenen Zustand der Fixiereinrichtung;
Figur 3: Prinzipskizze mit Schnitt durch die Crash-Blockiereinrichtung im geschlossenen Zustand der Fixiereinrichtung im Falle eines Crashs;
Figur 4: Ausführungsform für eine erfindungsgemässe Lenksäule mit auseinandergezogener Darstellung der Einzelteile der Fixiereinrichtung;
Figur 5: Ausführungsform für eine erfindungsgemässe Lenksäule mit auseinandergezogener Darstellung der Einzelteile der Fixiereinrichtung in gegenüber Figur 4 geänderter Ansicht.
Figur 6: Seitenansicht einer Ausführungsform einer erfindungsgemässen Lenksäule;
Figur 7: Schnittdarstellung durch Fixiereinrichtung im geöffneten Zustand entsprechend Schnittachse A-A in Figur 6;
Figur 8: Schnittdarstellung durch Fixiereinrichtung im geöffneten Zustand entsprechend Schnittachse B-B in Figur 6;
Figur 9: Prinzipskizze mit Draufsicht auf die Crash-Blockiereinrichtung mit den Schuppen von der Seite gesehen auf die die Schuppen aus der Oberfläche herausstehen.
Figur 10: Ausführungsform für ein Blockierelement mit den Schuppen.

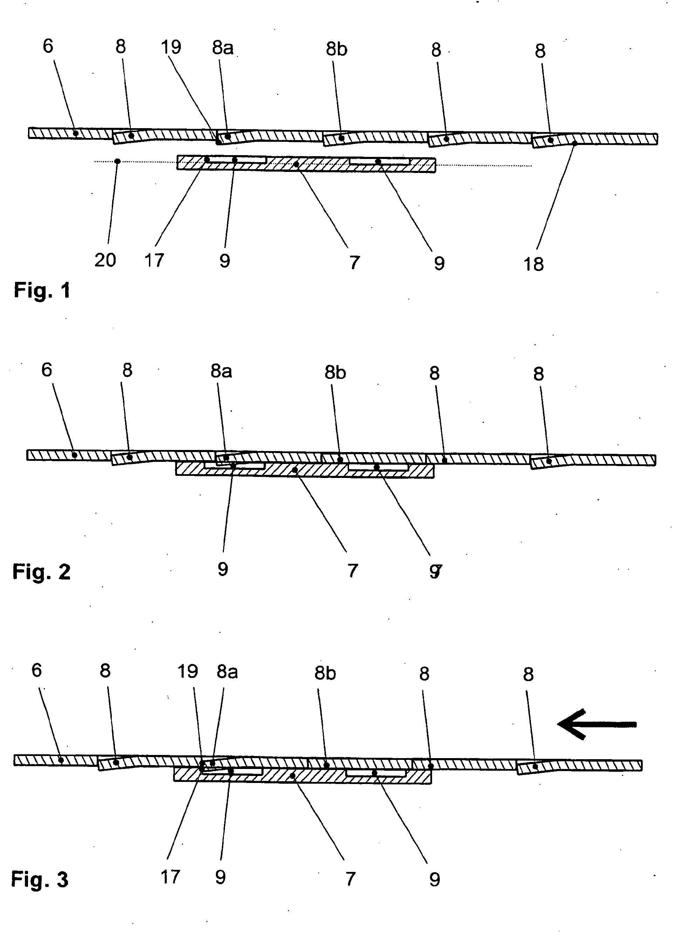

Die Figuren 1, 2 und 3 veranschaulichen das Wirkprinzip der Crash-Blockiereinrichtung, die in das Fixiersystem einer verstellbaren Lenksäule integriert sein kann. Das eine Blockierelement 6 weist federnd aus seiner Oberfläche herausragende Schuppen 8 auf. Das andere Blockierele ment 7 weist Aussparungen 9 auf, deren Öffnungen den Schuppen 8 zugewandt sind. Dabei sind die Aussparungen bevorzugt nur einseitig geöffnet.

Dies kann einfach durch eine zweiteilige Ausführung des Blockierelementes 7 realisiert sein. Dabei wird ein Element mit durchgehenden Aussparungen 9 und ein Element ohne Aussparungen an der in Figur 1 gezeigten Fügelinie 20 aneinander gelegt. Die Elemente können miteinander verbunden sein, beispielsweise verschweißt, oder nicht.

Im geschlossenen Zustand der Fixiereinrichtung sind die Blockierelemente 6, 7 aneinander angelegt, wobei einzelne Schuppen 8b in die Oberfläche des Blockierelementes 6 zurückgedrückt sind und andere Schuppen 8a in die Aussparungen 9 des anderen Blockierelementes 7 hineinragen (vgl. Fig. 2).

Im Crashfall wirkt eine Verschiebekraft in Richtung des Pfeils auf das mit dem Stellteil verbundene Blockierelement 6, wodurch es im Beispiel zu einer kleinen relativen Verschiebung kommt, bis die Stirnfläche 19 der Schuppe 8a mit dem Rand 17 der Aussparung in Kontakt kommt und dort eine Blockierkraft gegen das weitere Verschieben in Pfeilrichtung bewirkt (vgl. Fig. 3).

Im geöffneten Zustand der Fixiereinrichtung sind die Blockierelemente 6, 7 soweit voneinander distanziert, dass die Schuppen 8 nicht in die Aussparungen 9 ragen (vgl. Fig. 1).

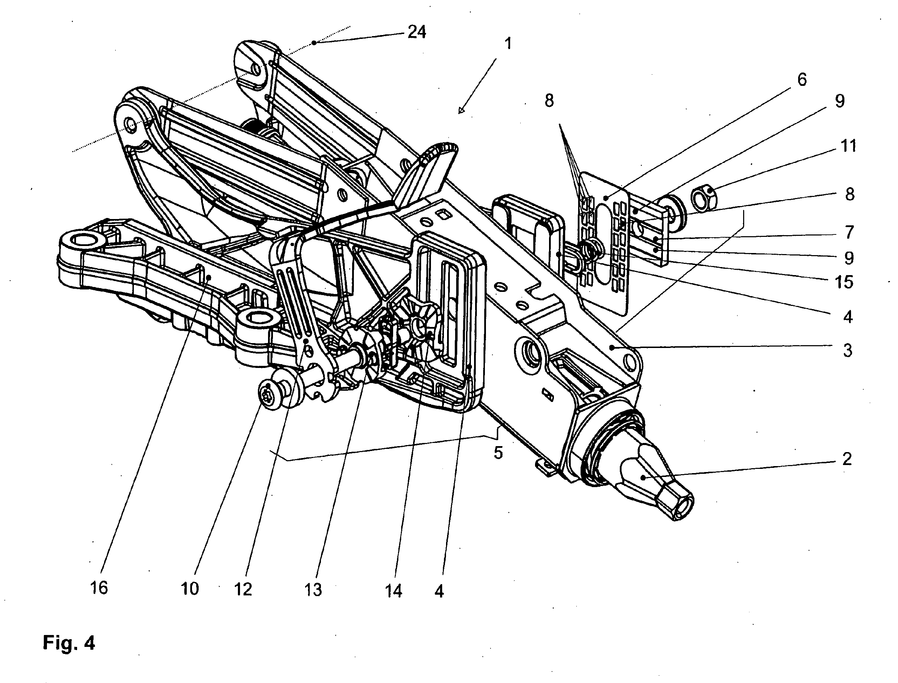

In den Figuren 4 bis 8 wird die Anwendung dieser Crash-Blockiereinrichtung auf eine verstellbare Lenksäule 1 schematisch veranschaulicht. Die Lenksäule 1 umfasst eine Lenkspindel 2, an der das nicht gezeigte Steuerrad befestigt ist, die von einem Stellteil 3 gehalten und drehbar gelagert ist, sowie ein Halteteil 4, das in einer Trageinheit 16, die am Chassis des nicht dargestellten Fahrzeugs befestigt ist, gehalten ist. Das Stellteil 3 ist im gezeigten Ausführungsbeispiel ein Mantelrohr bzw. eine Manteleinheit, die die Lenkspindel 2 drehbar lagert. Das Halteteil 4 wird von beidseitig des Mantelrohrs angeordneten Seitenwangen gebildet, die gegenüber dem Mantelrohr 3 um eine Schwenkachse 24 verschwenkbar gelagert sind. Es handelt sich somit beim gezeigten Ausführungsbeispiel um eine nur in der Höhe bzw. in ihrer Schwenkstellung bezüglich der Schwenkachse 24 verstellbare Lenksäule.

Im Crashfall kann es je nach Ausführungsform vorgesehen sein, dass das Halteteil 4 sich gegenüber der Trageinheit 16 unter Aufzehrung von Energie verschiebt. Lösungen hierfür sind nicht Bestandteil der Erfindung und werden daher auch hier nicht weiter ausgeführt.

Eine Fixiereinrichtung 5 ermöglicht die Fixierung und die Freigabe der Verstellung der Lage des Stellteils 3 gegenüber dem Halteteil 4 mit dem Spannhebel 12. Im Beispiel ist die Fixiereinrichtung als Klemmsystem ausgebildet, bei dem eine Klemmachse 10 das Halteteil 4 und das Stellteil 3 durchsetzt und die Öffnungs- und Schliessbewegung durch die Verdrehung einer Nockenscheibe 13 gegen eine Kulissenscheibe 14 freigegeben bzw. gesperrt wird. Die Nockenscheibe wird durch den Spannhebel 12 betätigt.

Die von der Klemmachse 10 durchsetzten Öffnungen im Halteteil 4 sind als Langlöcher ausgebildet, die sich in Richtung der Höhenverstellung der Lenksäule erstrecken. Die Öffnung im Stellteil 3 wird von der Klemmachse 10 mit Spiel durchsetzt, um die bogenförmige Bewegung des Stellteils 3 um die Schwenkachse 24 aufnehmen zu können. Statt dessen könnten auch die Langlöcher im Halteteil 4 bogenförmig ausgebildet sein.

Das eine Blockierelement 7 ist als ebene Platte ausgebildet, die Aussparungen 9 besitzt. Dieses Blockierelement 7 wird bevorzugt durch Sintern oder als Blechstanzteil hergestellt. Die Sintertechnologie bietet den Vorteil, die Aussparungen einfach als Sacklöcher oder als Nuten, die senkrecht zur möglichen Verstellrichtung ausgerichtet sind, ohne Nacharbeit auszubilden. In der Ausführung als Blechstanzteil werden die Aussparungen durchgestanzt und bevorzugt durch ein zweites Blechteil auf der den Schuppen 8 abgewandten Seite, etwa entlang der in Figur 1 angedeuteten Fügelinie 20, abgedeckt.

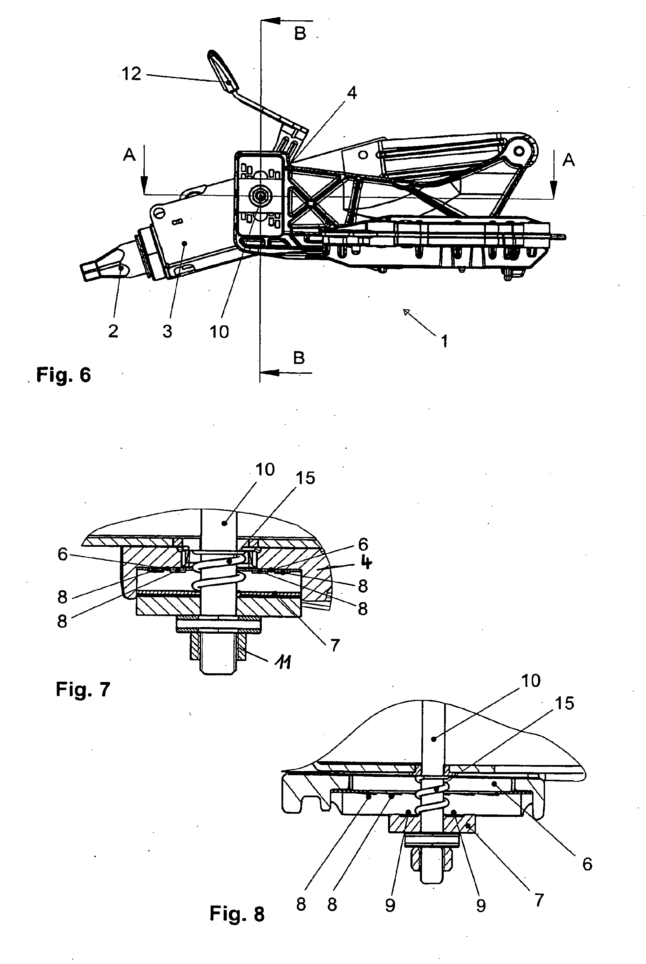

Das Blockierelement 7 mit den Aussparungen 9 ist bevorzugterweise verdrehsicher gehalten, im gezeigten Ausführungsbeispiel durch Eingriff in eine Ausnehmung im Halteteil 4 (vgl. Fig. 7).

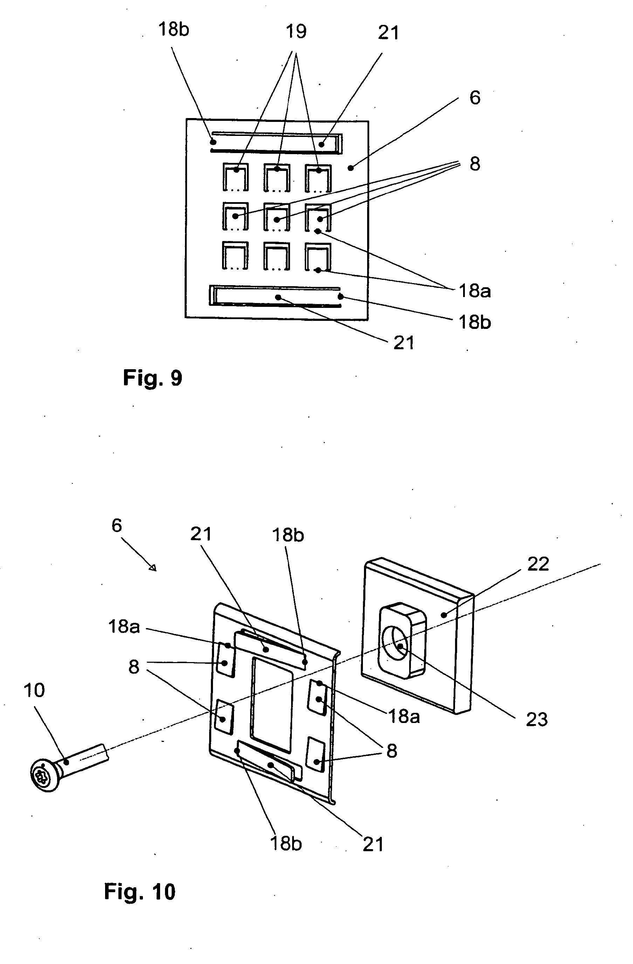

Das andere Blockierelement 6 ist bevorzugt als ebenes Blechstanzteil ausgebildet, bei dem Schuppen 8 durch Stanzen und Prägen erzeugt sind. Diese Ausführungsform ist in der Figur 9 schematisch veranschaulicht. Zumindest einige der Stirnflächen 19 der Schuppen 8 sind dabei derart ausgerichtet, dass sie, wenn sie im geschlossenen Zustand der Fixiereinrichtung in eine Aussparung 9 des anderen Blockierelements 7 ragen, dem Rand der Aussparung 9 (= der die Aussparung 9 begrenzenden Innenwandung, die vorzugsweise rechtwinklig zur Verstellrichtung steht) gegenüber liegen und dadurch zur Anlage an den Rand der Aussparung 9 gelangen können und die Blockierung des Stellteils gegenüber dem Halteteil bewirken können. Entsprechend ist in dieser Ausführungsform durch den Prägevorgang eine Knicklinie 18a beim Übergang vom Blockierelement zur ausgeformten Schuppe ausgebildet.

In der schematischen Darstellung gemäß Fig. 9 weisen die freien Enden der Schuppen 8 alle in die gleiche Richtung. Bevorzugterweise sind aber Schuppen vorhanden, deren freie Enden in entgegengesetzte Richtungen weisen, um in beide Richtungen der Verstellrichtung eine von der Crash-Blockiereinrichtung hervorgerufene zusätzliche Haltekraft zu erreichen.

Dieses Blockierelement 6 wird im gezeigten Ausführungsbeispiel formschlüssig in einer Seitenwange im Halteteil 4 gegen Verdrehung gehalten.

Im geöffneten Zustand der Fixiereinrichtung sind die beiden Blockierelemente 6, 7 voneinander abgehoben. Hierzu drückt eine Feder 15 die beiden Blockierelemente auseinander, so dass die Schuppen 8 sicher ausser Eingriff der Aussparungen 9 gebracht sind. Mit der Haltemutter 11 ist die maximale Öffnung einstellbar.

Im geschlossenen Zustand der Fixiereinrichtung liegend die beiden Blockierelemente 6, 7 aneinander an. Durch die Fixiereinrichtung ist die eingestellte Position der Lenksäule für den "Normalbetrieb" fixiert. Hierzu sind im gezeigten Ausführungsbeispiel die das Halteteil 4 bildenden Seitenwangen an die ebenen Seitenflächen des Stellteils 3 angedrückt. Weiters ist die von der Nockenscheibe 13 abgewandte Seite der Kulissenscheibe 14 an die eine Seitenwange angedrückt. Weiters wird die dem Blockierelement 6 zugewandte Oberfläche des Blockierelements 7, in den Bereichen, in welchen keine Aussparungen. vorhanden sind, an das Blockierelement 6 angedrückt, wodurch eine weitere reibschlüssige Verklemmung bewirkt wird:

Im Crashfall können Kräfte auf die Lenksäule einwirken, die die reibschlüssige Halterung des Stellteils 3 gegenüber dem Halteteil 4 übersteigen würden. Solche Kräfte können von der Crash-Blockiereinrichtung aufgenommen werden. Hierzu können freie Enden von Schuppen 8 zur Anlage an Ränder von Ausnehmungen 9 gelangen und die Verstellung des Stellteils 3 gegenüber dem Halteteil 4 formschlüssig blockieren, wobei es zu einer weiteren Aufbiegung der Schuppen 8 kommen kann.

In einer vorteilhaften Weiterbildung der Erfindung ist diese Feder analog wie die Schuppen 8 ausgelegt oder in der einfachsten Weiterbildung bringt mindest eine der Schuppen 8 des Blockierelementes 6, die nicht in eine der Aussparungen 9 des anderen Blockierelementes 7 greift, durch Kontakt mit der Oberfläche des Blockierelementes 7 eine Federkraft auf, die die Blockierelemente 6,7 bei geöffneter Fixiereinrichtung 5 auseinander drückt und damit die Verstellbarkeit des Stellteils 3 gegenüber dem Halteteil 4 ermöglicht. Insbesondere bevorzugt wird eine zusätzliche Schuppe als Schuppenfeder 21 in das Blockierelement 6 integriert, die niemals in eine der Aussparungen 9 des anderen Blockierelementes eingreifen kann und bevorzugt einen grösseren Federweg als die übrigen Schuppen 8 aufweist. Dazu wird das Blockierelement 6 beispielsweise mit zwei Schuppenfedern 21 ausgebildet, deren Knickkante 18b orthogonal zu den Knickkanten 18a der Schuppen 8 ausgerichtet sind, wie es schematisch in den Figuren 9 und 10 dargestellt ist.

Es ist offensichtlich, dass die beiden Blockierelemente 6, 7 auch ausgetauscht in der Fixiereinrichtung angeordnet sein können. Das heisst, dass die Schuppe 8 nicht weg von der Seitenwange, sondern hin zur Seitenwange des Halteteils 4 ausgerichtet ist. Entsprechend ist das Blockierelement 7 mit den Aussparungen 9 nicht auf der vom Halteteil abgewandten Seite, sondern zwischen Halteteil und dem Blockierelement 6 mit den Schuppen 8 angeordnet. Entsprechend ist die Erfindung auf die beiden alternativen Ausführungen anwendbar:
A) Das Blockierelement mit Schuppen 8 ist mit dem Halteteil 4 direkt oder indirekt verbun-den und entsprechend ist das Blockierelement mit den Aussparungen 9 mit dem Stellteil 3 direkt oder indirekt verbunden, sowie
B) das Blockierelement mit Schuppen 8 ist mit dem Stellteil 3 direkt oder indirekt verbunden und entsprechend ist das Blockierelement mit den Aussparungen 9 mit dem Halteteil 4 direkt oder indirekt verbunden.

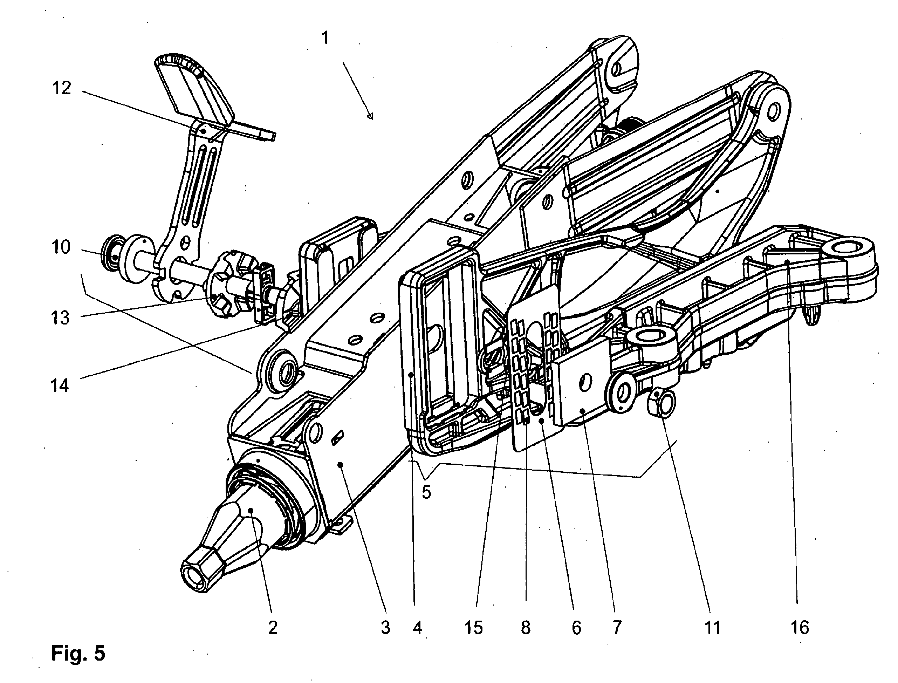

In der Figur 10 ist dabei eine alternative Ausführungsform für ein Blockierelement 6 dargestellt. Diese alternative Ausführungsform ist für die im vorangegangenen Absatz genannte alternative Anordnung der Blockierelemente 6, 7 in der Fixiereinrichtung 5 geeignet, bei der die Blockierelemente 6 und 7 gegenüber der in den Figuren 4 und 5 gezeigten Anordnung vertauscht sind. Hier ist das Blockierelement 6 als Blechstanzteil mit vier Schuppen 8 ausgebildet. Zusätzlich sind zwei Schuppenfedern 21 in das Blechstanzteil integriert, deren Knickkante 18b orthogonal zu den Knickkanten 18a der Schuppe 8. Das Blockierelement ist auf einem Trägerelement 22 mittels Formschluss gelagert. Das Trägerelement 22 ist entsprechend dieser Ausführung über eine Aussparung 23, durch die ein Spannbolzen geführt ist mit dem Spannbolzen und somit mit dem Stellteil 3 in die Stellrichtung, in die die Blockierelemente 6, 7 wirken, unverschiebbar verbunden, was in der Figur 10 nicht weiter dargestellt wird.

Denkbar und möglich ist es auch, dass mindestens eine Schuppenfeder 21 auf dem einen der beiden Blockierelemente und mindestens eine Schuppe 8 auf dem anderen der beiden Blockierelemente angeordnet ist.

Weiter können zwei derartige Paare von Blockierelementen vorgesehen sein, wobei jedes die Crash-Blockierung für eine der beiden möglichen Verstellrichtungen des Stellteils 3 gegenüber dem Halteteil 4 übernimmt. Entsprechend sind die Richtungen, in denen die Schuppen 8 korrespondierend mit den Aussparungen 9 zusammenwirken, ausgerichtet.

Auch wenn in der hier gezeigte Ausführungsform die Crash-Blockiereinrichtung nur auf einer Seite des Halteteils 4 und auf der vom Stellteil 3 abgewandten Seite angeordnet ist, kann die Crash-Blockiereinrichtung auch auf beiden Seiten und/oder zwischen Halteteil 4 und Stellteil 3 angeordnet sein.

Weiter können die Schuppen auch durch extra ausgebildete Platten, die mit Federn aus dem Blockierelement herausgedrückt werden, dargestellt sein.

In einer weiteren vorteilhaften Ausführungsform der Erfindung ist an der Außenseite des Stellteils 3 mindestens eine Lamelle befestigt und am Halteteil 4 ist mindestens eine Lamelle befestigt, die die am Stellteil 3 befestigte Lamelle kreuzt, wobei die Lamellen von der Klemmachse 10 durchsetzte Öffnungen aufweisen und im geschlossenen Zustand der Fixiereinrichtung gegeneinander verspannt sind. Vorzugsweise sind jeweils mehrere solcher Lamellen vorhanden und die beiden Lamellenpakete auf einer oder auf beiden Seiten des Stellteils 3 durchsetzen sich sandwichartig. Durch solche Lamellen kann die Anzahl der Reibflächen vergrößert werden. Mindestens eine dieser Lamellen kann die Schuppen 8 der Crash-Blockiereinrichtung aufweisen. Eine derartige Lenksäule kann sowohl in der Länge als auch in der Höhe bzw. Neigung verstellbar ausgebildet sein. Für beide Verstellrichtungen kann eine erfindungsgemäße Crash-Blockiereinrichtung vorhanden sein, wobei vorzugsweise die Schuppen 8 der Crash-Blockiereinrichtungen jeweils an mindestens einer der Lamellen ausgebildet sind.

Die Erfindung ist auch im Zusammenhang mit anderen reibschlüssigen und/oder formschlüssig gen Fixiereinrichtungen einsetzbar, beispielsweise auch mit Fixiereinrichtungen, bei denen im geschlossenen Zustand Verzahnungen an Stellteilen und Halteteilen miteinander in Eingriff gebracht werden, um die Verstellung in eine jeweilige Verstellrichtung zu blockieren.

### Legende

### zu den Hinweisziffern:

- 1: Lenksäule
- 2: Lenkspindel
- 3: Stellteil
- 4: Halteteil
- 5: Fixiereinrichtung
- 6: Blockierelement
- 7: Blockierelement
- 8: Schuppe
- 8a: Schuppe
- 8b: Schuppe
- 9: Aussparung
- 10: Klemmachse
- 11: Haltemutter
- 12: Spannhebel
- 13: Nockenscheibe
- 14: Kulissenscheibe
- 15.: Feder
- 16.: Trageinheit
- 17: Berandung der Aussparung
- 18a: Knickkante Schuppe
- 18b: Knickkante Schuppenfeder
- 19: Schuppenstirnfläche
- 20: Fügelinie
- 21: Schuppenfeder
- 22: Trägerelement
- 23: Aussparung
- 24: Schwenkachse
- A: Schnittebene
- B: Schnittebene

## Patentansprüche

1. Verstellbare Lenksäule für ein Kraftfahrzeug mit einem in mindestens eine Stellrichtung verstellbaren Stellteil (3) zur Einstellung der Position der Lenksäule, einem in diese Stellrichtung unverstellbaren Halteteil (4), einer Fixiereinrichtung (5), in deren geöffnetem Zustand das Stellteil (3) gegenüber dem Halteteil (4) zur Einstellung der Position der Lenksäule verstellbar ist und in deren geschlossenem Zustand das stellteil von der Fixiereinrichtung (5) gegenüber dem Halteteil festgestellt ist, wobei die verstellbare Lenksäule eine Crash-Blockiereinrichtung umfasst, von der eine zusätzliche Haltekraft gegen eine Verschiebung des Stellteils (3) gegenüber dem Halteteil (4) ausübbar ist und die ein mit dem Stellteil (3) verbundenes Blockierelement (6, 7) und ein mit dem Halteteil (4) verbundenes Blockierelement (6, 7) aufweist, **dadurch gekennzeichnet, dass** eines dieser Blockierelemente (6, 7) zumindest eine Schuppe (8) aufweist, die im unbelasteten Zustand federnd aus der Oberfläche des Blockierelements (6) herausragt, und das andere dieser Blockierelemente (6, 7) zumindest eine Aussparung (9) aufweist und im geschlossenen Zustand der Fixiereinrichtung mindestens eine Schuppe (8) im Bereich einer Aussparung (9) liegt oder bei einem einsetzenden Durchrutschen des Stellteils (3) gegenüber dem Halteteil (4) in den Bereich einer Aussparung (9) gelangt und die mindestens eine im Bereich der Aussparung (9) liegende oder in diesen gelangende Schuppe (8) in die Aussparung (9) hineinragt und einem Rand (17) der Aussparung (9) gegenüber liegt.

2. Verstellbare Lenksäule für ein Kraftfahrzeug nach Anspruch 1, **dadurch gekennzeichnet, dass** die mindestens eine Schuppe (8) im geöffneten Zustand der Fixiereinrichtung (5) außer Eingriff mit der mindestens einen Aussparung (9) gebracht ist.

3. Verstellbare Lenksäule für ein Kraftfahrzeug nach Anspruch 2, **dadurch gekennzeichnet, dass** eine Feder (15, 21) vorgesehen ist, deren Federkraft im geöffneten Zustand der Fixiereinrichtung (5) die mindestens eine Schuppe (8) außer Eingriff aus der mindestens einen Aussparung (9) bringt.

4. Verstellbare Lenksäule für ein Kraftfahrzeug nach einem der vorhergehenden Ansprüche, **dadurch gekennzeichnet, dass** die Fixiereinrichtung eine mit dem Stellteil zumindest in einer Verstellrichtung mitbewegte Klemmachse (10) aufweist, die eines der beiden Blockierelemente (6, 7) trägt, wobei dieses Blockierelement (6, 7) in die Verstellrichtung unverschiebbar gegenüber der Klemmachse (10) ist.

5. Verstellbare Lenksäule für ein Kraftfahrzeug nach einem der Ansprüche 1 bis 3, **dadurch gekennzeichnet, dass** eines der beiden Blockierelemente (6, 7) direkt am Stellteil (3) befestigt ist.

6. Verstellbare Lenksäule für ein Kraftfahrzeug nach einem der Ansprüche 1 bis 3, **dadurch gekennzeichnet, dass** eines der beiden Blockierelemente vom Halteteil (4) in die Verstellrichtung, in die es wirkt, unverschiebbar gehalten ist oder einteilig mit dem Halteteil (4) ausgebildet ist.

7. Verstellbare Lenksäule für ein Kraftfahrzeug nach einem der vorhergehenden Ansprüche, **dadurch gekennzeichnet, dass** das Blockierelement (6), das die mindestens eine Schuppe (8) aufweist, aus einem, bevorzugt ebenen, Blech ausgebildet ist, wobei die mindestens eine Schuppe (8) und das Blockierelement (6) einteilig miteinander ausgebildet sind und die mindestens eine Schuppe (8) bevorzugt durch Ausstanzen eines Teils ihres Umfanges und Prägen gebildet ist.

8. Verstellbare Lenksäule für ein Kraftfahrzeug nach einem der vorhergehenden Ansprüche, **dadurch gekennzeichnet, dass** für jede Verstellrichtung eine derartige Crash-Blockiereinrichtung vorgesehen ist.

9. Verstellbare Lenksäule für ein Kraftfahrzeug nach einem der vorhergehenden Ansprüche, **dadurch gekennzeichnet, dass** die Fixiereinrichtung mindestens eine mit dem Stellteil (3) verbundene Lamelle und mindestens eine mit dem Halteteil (4) verbundene Lamelle umfasst, wobei mindestens eine dieser Lamellen als mit mindestens einer Schuppe (8) versehenes Blockierelement (6) der Crash-Blockiereinrichtung ausgebildet ist.

10. Verstellbare Lenksäule nach Anspruch 9, **dadurch gekennzeichnet, dass** sowohl mindestens eine der mit dem Stellteil (3) verbundenen Lamellen als auch mindestens eine der mit dem Halteteil (4) verbundenen Lamellen als mit mindestens einer Schuppe (8) versehenes Blockierelement (6) der Crash-Blockiereinrichtung ausgebildet ist.

11. Verstellbare Lenksäule für ein Kraftfahrzeug nach einem der vorhergehenden Ansprüche, **dadurch gekennzeichnet, dass** die Crash-Blockiereinrichtung in die Fixiereinrichtung integriert ist.

12. Verstellbare Lenksäule nach einem der Ansprüche 1 bis 11, **dadurch gekennzeichnet, dass** das eine Blockierelement (6) mehrere Schuppen (8) zum Zusammenwirken mit der mindestens einen Aussparung (9) des anderen Blockierelements (7) aufweist.

13. Verstellbare Lenksäule nach Anspruch 12, **dadurch gekennzeichnet, dass** mit ihren freien Enden in entgegensetzte Richtungen weisende Schuppen (8) vorhanden sind.

14. Verstellbare Lenksäule nach einem der Ansprüche 1 bis 13, **dadurch gekennzeichnet, dass** das andere Blockierelement (7) mehrere Aussparungen (9) zum Zusammenwirken mit der mindestens einen Schuppe (8) des einen Blockierelements (6) aufweist.

## Claims

1. An adjustable steering column for a motor vehicle, having an adjustment part (3), adjustable in at least one adjustment direction, for setting the position of the steering column, a holding part (4), non-adjustable in this adjustment direction, a fixing device (5), in the opened state of which the adjustment part (3) is adjustable with respect to the holding part (4) for setting the position of the steering column and in the closed state of which the adjustment part is secured in position with respect to the holding part by the fixing device (5), wherein the adjustable steering column comprises a crash blocking device by which an additional holding force against a displacement of the adjustment part (3) with respect to the holding part (4) can be exerted and which has a blocking element (6, 7) connected to the adjustment part (3) and a blocking element (6, 7) connected to the holding part (4), **characterised in that** one of these blocking elements (6, 7) has at least one scale (8) which in the unloaded state projects resiliently from the surface of the blocking element (6) and the other of these blocking elements (6, 7) has at least one cut-out (9) and in the closed state of the fixing device at least one scale (8) lies in the region of a cut-out (9) or upon onset of a sliding through of the adjustment part (3) with respect to the holding part (4) reaches the region of a cut-out (9) and the at least one scale (8) lying in the region of the cut-out (9) or coming into this region projects into the cut-out (9) and faces an edge (17) of the cut-out (9).

2. An adjustable steering column for a motor vehicle according to claim 1, **characterised in that** the at least one scale (8) is in the opened state of the fixing device (5) disengaged from the at least one cut-out (9).

3. An adjustable steering column for a motor vehicle according to claim 2, **characterised in that** a spring (15, 21) is provided, whose elastic force in the opened state of the fixing device (5) disengages the at least one scale (8) from the at least one cut-out (9).

4. An adjustable steering column for a motor vehicle according to any one of the preceding claims, **characterised in that** the fixing device has a clamping spindle (10), entrained with the adjustment part in at least one adjustment direction, which bears one of the two blocking elements (6, 7), wherein this blocking element (6, 7) is non-displaceable in the adjustment direction with respect to the clamping spindle (10).

5. An adjustable steering column for a motor vehicle according to any one of claims 1 to 3, **characterised in that** one of the two blocking elements (6, 7) is secured to the adjustment part (3) directly.

6. An adjustable steering column for a motor vehicle according to any one of claims 1 to 3, **characterised in that** one of the two blocking elements is held by the holding part (4) so as to be non-displaceable in the adjustment direction in which it acts or is in one piece with the holding part (4).

7. An adjustable steering column for a motor vehicle according to any one of the preceding claims, **characterised in that** the blocking element (6), having the at least one scale (8), is formed of a, preferably plane, metal sheet, wherein the at least one scale (8) and the blocking element (6) are in one piece with one another and the at least one scale (8) is preferably formed by punching out part of its circumference and stamping.

8. An adjustable steering column for a motor vehicle according to any one of the preceding claims, **characterised in that** such a crash blocking device is provided for each adjustment direction.

9. An adjustable steering column for a motor vehicle according to any one of the preceding claims, **characterised in that** the fixing device comprises at least one lamella connected to the adjustment part (3) and at least one lamella connected to the holding part (4), wherein at least one of these lamellas is in the form of a blocking element (6), provided with at least one scale (8), of the crash blocking device.

10. An adjustable steering column according to claim 9, **characterised in that** at least one of the lamellas connected to the adjustment part (3) as well as at least one of the lamellas connected to the holding part (4) are in the form of a blocking element (6), provided with at least one scale (8), of the crash blocking device.

11. An adjustable steering column for a motor vehicle according to any one of the preceding claims, **characterised in that** the crash blocking device is integrated into the fixing device.

12. An adjustable steering column according to any one of claims 1 to 11, **characterised in that** one blocking element (6) has a plurality of scales (8) to cooperate with the at least one cut-out (9) of the other blocking element (7).

13. An adjustable steering column according to claim 12, **characterised in that** scales (8) whose free ends are directed in opposite directions are present.

14. An adjustable steering column according to any one of claims 1 to 13, **characterised in that** the other blocking element (7) has a plurality of cutouts (9) to cooperate with the at least one scale (8) of one blocking element (6).

## Revendications

1. Colonne de direction réglable pour un véhicule automobile avec une pièce de réglage (3) réglable dans au moins une direction de réglage pour le réglage de la position de la colonne de direction, avec une pièce de maintien (4) non réglable dans cette direction de réglage, avec un dispositif de fixation (5), dans l'état ouvert duquel la pièce de réglage (3) est réglable par rapport à la pièce de maintien (4) pour le réglage de la position de la colonne de direction et dans l'état fermé duquel la pièce de réglage est immobilisée par rapport à la pièce de maintien par le dispositif de fixation (5), dans laquelle la colonne de direction réglable comprend un dispositif de blocage de collision, par lequel une force de maintien supplémentaire peut être exercée contre un déplacement de la pièce de réglage (3) par rapport à la pièce de maintien (4) et qui présente un élément de blocage (6, 7) relié à la pièce de réglage (3) et un élément de blocage (6, 7) relié à la pièce de maintien (4), **caractérisée en ce qu'**un de ces éléments de blocage (6, 7) présente au moins une lamelle (8) qui, à l'état déchargé, sort élastiquement de la surface de l'élément de blocage (6), et l'autre de ces éléments de blocage (6, 7) présente au moins un évidement (9), et à l'état fermé du dispositif de fixation au moins une lamelle (8) se situe dans la région d'un évidement (9) ou arrive dans la région d'un évidement (9) lorsqu'il se produit un glissement de la pièce de réglage (3) par rapport à la pièce de maintien (4) et ladite au moins une lamelle (8) située dans la région de l'évidement (9) ou arrivant dans celle-ci s'engage dans l'évidement (9) et est située en face d'un bord (17) de l'évidement (9).

2. Colonne de direction réglable pour un véhicule automobile selon la revendication 1, **caractérisée en ce que** ladite au moins une lamelle (8) est amenée, à l'état ouvert du dispositif de fixation (5), hors d'engagement avec ledit au moins un évidement (9).

3. Colonne de direction réglable pour un véhicule automobile selon la revendication 2, **caractérisée en ce qu'**il est prévu un ressort (15, 21), dont la force élastique amène, à l'état ouvert du dispositif de fixation (5), ladite au moins une lamelle (8) hors d'engagement avec ledit au moins un évidement (9).

4. Colonne de direction réglable pour un véhicule automobile selon l'une quelconque des revendications précédentes, **caractérisée en ce que** le dispositif de fixation présente un axe de serrage (10) se déplaçant avec la pièce de réglage au moins dans une direction de réglage, qui porte un des deux éléments de blocage (6, 7), dans laquelle cet élément de blocage (6, 7) n'est pas déplaçable par rapport à l'axe de serrage (10) dans la direction de réglage.

5. Colonne de direction réglable pour un véhicule automobile selon l'une des revendications 1 à 3, **caractérisée en ce qu'**un des deux éléments de blocage (6, 7) est fixé directement à la pièce de réglage (3).

6. Colonne de direction réglable pour un véhicule automobile selon l'une des revendications 1 à 3, **caractérisée en ce qu'**en ce qu'un des deux éléments de blocage est maintenu par la pièce de maintien (4) d'une manière non déplaçable dans la direction de réglage dans laquelle il agit ou est formé d'une seule pièce avec la pièce de maintien (4).

7. Colonne de direction réglable pour un véhicule automobile selon l'une quelconque des revendications précédentes, **caractérisée en ce que** l'élément de blocage (6), qui présente ladite au moins une lamelle (8), est réalisé à partir d'une tôle de préférence plane, dans laquelle ladite au moins une lamelle (8) et l'élément de blocage (6) sont réalisés d'une seule pièce l'un avec l'autre et ladite au moins une lamelle (8) est réalisée de préférence par découpe à la presse d'une partie de son pourtour et matriçage.

8. Colonne de direction réglable pour un véhicule automobile selon l'une quelconque des revendications précédentes, **caractérisée en ce qu'**il est prévu un tel dispositif de blocage de collision pour chaque direction de réglage.

9. Colonne de direction réglable pour un véhicule automobile selon l'une quelconque des revendications précédentes, **caractérisée en ce que** le dispositif de fixation comprend au moins une lame reliée à la pièce de réglage (3) et au moins une lame reliée à la pièce de maintien (4), dans laquelle au moins une de ces lames est réalisée sous la forme d'un élément de blocage (6) du dispositif de blocage de collision muni de ladite au moins une lamelle (8).

10. Colonne de direction réglable pour un véhicule automobile selon la revendication 9, **caractérisée en ce qu'**aussi bien au moins une des lames reliées à la pièce de réglage (3) qu'au moins une des lames reliées à la pièce de maintien (4) est réalisée sous la forme d'un élément de blocage (6) du dispositif de blocage de collision muni de ladite au moins une lamelle (8).

11. Colonne de direction réglable pour un véhicule automobile selon l'une quelconque des revendications précédentes, **caractérisée en ce que** le dispositif de blocage de collision est intégré dans le dispositif de fixation.

12. Colonne de direction réglable pour un véhicule automobile selon l'une quelconque des revendications 1 à 11, **caractérisée en ce que** le premier élément de blocage (6) présente plusieurs lamelles (8) destinées à coopérer avec ledit au moins un évidement (9) de l'autre élément de blocage (7).

13. Colonne de direction réglable pour un véhicule automobile selon la revendication 12, **caractérisée en ce qu'**il se trouve des lamelles (8) dont les extrémités libres sont orientées dans des directions opposées.

14. Colonne de direction réglable pour un véhicule automobile selon l'une quelconque des revendications 1 à 13, **caractérisée en ce que** l'autre élément de blocage (7) présente plusieurs évidements (9) destinés à coopérer avec ladite au moins une lamelle (8) du premier élément de blocage (6).
